# EUROPEAN PATENT APPLICATION

(11) **EP 4 666 861 A1**
(43) Date of publication of application: **24.12.2025**
(21) Application number: 24182841.7
(22) Date of filing: 18.06.2024
(51) Int. Cl.: A23G 1/00, A23G 1/02, A23G 1/36, A23G 1/42, A23G 1/48

(54) **A CHOCOLATE PRODUCT AND A METHOD FOR MANUFACTURE OF A CHOCOLATE PRODUCT**

(71) Applicant: Nosh.bio GmbH, 12489 Berlin (DE)
(72) Inventor: SENNE DE OLIVEIRA LINO, Felipe, 12489 Berlin (DE); FRONZEK, Tim, 12489 Berlin (DE); MARANGONI, Alejandro Gregorio, Guelph ON NIG 2WI (CA); MIRZAEE GHAZANI, Saeed, Guelph ON NIG 2WI (CA)
(74) Representative: Adares PartGmbB

(57) **Abstract**

The present invention relates to a chocolate product (1, 2) comprising
- at least one cocoa ingredient selected from the group comprising cocoa nibs, cocoa butter, cocoa powder, cocoa liquor,
- sugar and/or a sugar replacer,
characterized by
- a biomass of a fungus.

Further, the present invention relates to a method for manufacture of a chocolate product (1, 2), comprising the following steps:
a) milling sugar and/or a sugar replacer together with a biomass of a fungus to form a mass,
b) adding melted cocoa butter to the mass to form a further mass,
c) milling the further mass for conching,
d) maintaining the milled further mass at a temperature of 40-45°C, and
e) tempering the milled and heated further mass in order to obtain the chocolate product (1, 2).

## Description

The present invention relates to a chocolate product and a method for manufacture of a chocolate product. A chocolate product is a food product which is made by use of roasted and ground cacao seed kernels. Cacao, scientifically known as Theobroma cacao L., is a member of the Sterculiaceae family and is often referred to as the "Food of the Gods." It is extensively cultivated in tropical regions, particularly in equatorial countries like Ivory Coast, Ghana, Indonesia, Brazil, Cameroon, Nigeria, and other regions with relatively lower production. Usually, the cacao tree seeds are fermented, dried, cleaned, and roasted, and shells of the cacao tree seeds are removed to produce cocoa nibs. The cocoa nibs can be ground to a cocoa mass which is unadulterated chocolate in rough form. Further, the cocoa nibs can be ground to form cocoa mass, also known as cocoa liquor or chocolate liquor, which is pressed to separate cocoa butter from non-fat cocoa solids. Typically, the chocolate products consumed today are in the form of a combination of cocoa butter, sugar, and, in case of dark and milk chocolate, cocoa nibs, wherein further additive(s) can be contained such as processing aid, milk ingredients, flavoring etc.

However, cocoa nibs have become very costly. Further, the cultivation farming of cacao has a high demand for land, leading to forest clearing in countries of manufacture. Being able to replace cocoa nibs and cocoa butter in chocolate products could reduce the environmental impact of the chocolate products and production costs thereof. Further, there is a consisting need of manufacturing chocolate products with lower fat and calorie contents.

Thus, it is an object for the present invention to provide a chocolate product and a method for manufacture of a chocolate product which have a reduced environmental impact, production costs, fat content and/or calorie content.

The object is solved by a chocolate product having features according to claim 1 and a method having features according to claim 8. Advantageous modifications and developments are subject of the dependent claims.

A reduction of the environmental impact of chocolate product is achieved on the one side. On the other side, the production costs of the chocolate product are reduced, since cocoa ingredient prices are very high. Further, a chocolate product with lower fat and calorie content is produced which is advantageous for a consumer.

The present invention relates to a chocolate product comprising
- at least one cocoa ingredient selected from the group comprising cocoa nibs, cocoa butter, cocoa powder, cocoa liquor,
- sugar and/or a sugar replacer,
   characterized by
- a biomass of a fungus.

The chocolate product can be a dark chocolate, a milk chocolate product, or a white chocolate product. According to the present invention, the term "chocolate product" is irrespective of its legal definition in food industry. It is a product comprising at least one cocoa ingredient and sugar and/or a sugar replacer. Preferably all afore-mentioned ingredients represent an amount of at least 70 wt.-%, more preferably at least 75 wt.-%, or 80 wt.-% of the chocolate product.

Preferably, the chocolate product comprises sugar. A sugar is a sweet-tasting, water-soluble carbohydrate(s) which is/are suitable for being used in food. The sugar can comprise monosaccharides such as glucose, fructose and/or galactose, and/or disaccharides such as sucrose, lactose and/or maltose. Preferably, the sugar is white sugar which is a refined form of sucrose. However, the chocolate product can comprise additionally or alternatively a sugar replacer. A sugar replacer is a food additive providing a sweetness like that of sugar but containing significantly less food energy than sugar. The sugar replacer may be derived through manufacturing of plant extracts or manufactured by chemical ways. Sugar replacers are commercially available in various forms, such as small pills, powders, and packets. Examples of sugar replacers include but are not limited to aspartame, saccharin, stevia, cyclamate, xylithol, and sorbitol.

Preferably, the biomass of the fungus has a dry matter content of at least 85 wt-%, preferably at least 90 wt.-%, more preferably at least 95 wt.-%, wherein the dry matter content is measured by thermogravimetric principle by measuring the start weight of a biomass sample before water draining, and drying the biomass sample by a radiant heater while measuring continuously the biomass sample weight by scale. Preferably, the biomass of the fungus is in powder form.

In a preferred embodiment the chocolate product comprises up to 6,0, preferably up to 5,5, more preferably up to 5,0 wt-% of the biomass of the fungus. Thereby, the chocolate product has no fungal taste and fungal aftertaste, no visible mycelium and no bloom development.

Preferably, the fungus is a filamentous fungus, wherein the the filamentous fungus is preferably selected from the group consisting of *Aspergillus oryzae, Aspergillus niger, Penicillium chrysogenum, Penicillium roqueforti, Lecanicillium lecanii, Candida tropicalis, Candida utilis, Debaryomyces hansenii, Kluyveromyces marxianus, Fusarium venenatum, Rhizopus oryzae, Tremel-la fuciformis, Neurospora intermedia, or Monascus purpureus.* The filamentous fungus is more preferably *Aspergillus oryzae.* The filamentous fungus is even more preferably *Aspergillus oryzae* MUCL 31309.

Preferably, the chocolate product further comprises at least one milk ingredient, preferably milk powder and/or milk fat, and/or a milk substitute. This embodiment is preferred for milk and white chocolate. Preferably, the milk ingredient is milk fat. Preferably, the dark chocolate is lactose-free and/or is free of milk ingredient.

Preferably, the chocolate product further comprises an emulsifier. More preferably, the emulsifier is lecithin. Preferably, the lecithin is derived from soya bean, sunflower, corn and the like. Preferably, the lecithin is sunflower lecithin. Preferably, the chocolate product contains lecithin in an amount of 0.2 to 1.0 wt.-%.

Preferably, the chocolate product further comprises at least one cocoa butter equivalent, preferably selected from shea butter, palm oil, illipe butter, shorea robusta butter, kokum oil and mango oil.

The chocolate product can have a taste of pure dark, milk or white chocolate. Alternatively, the chocolate product can have different flavors which can be created by one or more additives. The additives can include but are not limited to
- natural and/or artificial flavoring and flavoring enhancer such as vanillin, vanilla extract and the like,
- nuts, and/or
   fruits.

In a preferred embodiment the chocolate product comprises less than 30.0 wt-% of the cocoa nibs, 5.0 to 15.0 wt-% of the cocoa butter, 40.0 to 50.0 wt.-% of the sugar, 0.2 to 1.0 wt.-% of lecithin, and 3.0 to 7.0 wt.-% of milk fat and up to 5.0 wt.-% of the biomass of the fungus. In this embodiment, the chocolate product is a milk chocolate product.

In another preferred embodiment, the chocolate product comprises more than 35.0 wt-% of the cocoa nibs, preferably 35.0 wt.-% to 45.0 wt.-% of the cocoa nibs, 2.0 to 7.0 wt-% of the cocoa butter, 40.0 to 50.0 wt.-% of the sugar, and 3.0 to 7.0 wt.-% of cocoa butter equivalent, 0.2 to 1.0 wt.-% of lecithin, and up to 5.0 wt.-% of the biomass of the fungus. More preferably, the chocolate product comprises 40 wt-% of the cocoa nibs, 5 wt-% of the cocoa butter, 44 wt.-% of the sugar, 1 wt.-% of lecithin, 5 wt.-% of the shea butter, and 5 wt.-% of the biomass of the fungus. In another preferred embodiment, the chocolate product comprises 40 wt-% of the cocoa nibs, 7 wt-% of the cocoa butter, 47 wt.-% of the sugar, 1 wt.-% of lecithin, and 5 wt.-% of the biomass of the fungus. In these embodiments, the chocolate product is a dark chocolate product. Further, it is vegan.

In a preferred embodiment, the chocolate product is a solid non-powder chocolate product at 25°C and ambient pressure. More preferably, the chocolate product is a chocolate bar. However, the chocolate product can be of any geometrical shape, e.g., cylindric, cubic, polyhedral and/or spherical.

Further, the present invention relates to a method for manufacture of a chocolate product, comprising the following steps:
a) milling sugar and/or sugar replacer together with a biomass of a fungus to form a mass,
b) adding melted cocoa butter to the mass to form a further mass,
c) milling the further mass for conching,
d) maintaining the milled further mass at a temperature of 40-45°C, and
e) tempering the milled and heated further mass in order to obtain the chocolate product.

Preferred embodiments, modifications and advantages of the chocolate product apply also to the method and vice versa.

Preferably, the step a) is performed over a first period of time in order to obtain particles having a mean particle size of 25 to 35 µm. The first period of time is, e.g., 8 to 16 h.

Preferably, the biomass of the fungus has a dry matter content of at least 85 wt-%, preferably at least 90 wt.-%, more preferably at least 95 wt.-%, wherein the dry matter content is measured by thermogravimetric principle by measuring the start weight of a biomass sample before water draining, and drying the biomass sample by a radiant heater while measuring continuously the biomass sample weight by scale. Preferably, the biomass of the fungus is used in powder form.

Preferably, the step c) is performed at a temperature in the range of 40 to 85°C. the step c) is performed over some hours, e.g. in the range of 3 to 78h. Continued milling for several hours results in the encapsulation of solid particles with cocoa butter and/or a formation of fine sugar crystals, e.g., approximately 30 microns, thereby eliminating undesirable volatile compounds generated during fermentation and roasting.

In the step d) the milled further mass is maintained at a temperature of 40-45°C without milling until the step e) is performed.

In a preferred embodiment, the method comprises the following steps f) to h) which are performed before the step b)
f) milling cocoa nibs separately from the sugar and the biomass of the fungus which are milled in the step a),
g) derive cocoa liquor in form of a fluid mass of the milled coca nibs,
h) incorporating the mass obtained in step a) into the derived cocoa liquor, wherein the step b) is performed by adding the melted cocoa butter to the mass which is incorporated into the derived cocoa liquor.
By this method, especially dark chocolate product and mild chocolate product is obtained.

Preferably, the step e) includes the following partial steps in the given order:
e1) cooling the milled and heated further mass to a temperature between 30 and 35°C to initiate crystallization,
e2) melting out unstable polymorphic crystals at a temperature between 29 to 31°C, and
e3) crystallizing at a temperature between 27 to 28°C.

Thereby, the chocolate production ensures that the chocolate product remains solid and firm at room temperature while completely melting in the mouth. Further, desirable physical and mechanical properties of chocolate, including gloss, snap, rapid melting at body temperature, and hardness, are further achieved. The step e1) includes cooling the melted chocolate in order to initiate crystallization, in the step e2) melting out unstable polymorphic crystals is performed, and finally in the step e3) crystallizing is performed by melting cocoa butter crystals in form IV and crystallizing them in form V. The desirable physical and mechanical properties of chocolate, including gloss, snap, rapid melting at body temperature, and hardness, are all linked to the crystallization of chocolate in form V.

In a preferred embodiment, the tempered further mass is molded in order to obtain a molded chocolate product. So, a predetermined geometrical shape such as a chocolate bar can be given to the chocolate product.

In the following embodiments of the invention are described in detail referring to the figures below. The figures show schematically
- Fig. 1: a plan view of a chocolate product of the present invention;
- Fig. 2: a plan view of a further chocolate product of the present invention;
- Fig. 3: a flow chart of a method according to the present invention;
- Fig. 4: a flow chart of a further method according to the present invention;
- Fig. 5: a flow chart of a step according to the method shown in Fig. 3 and 4, respectively,
- Fig. 6: a plan view of a further chocolate product of the present invention;
- Fig. 7: a melting profile of the chocolate, as shown in Fig. 1; and
- Fig. 8: a crystal polymorphic form of the chocolate, as shown in Fig. 1.

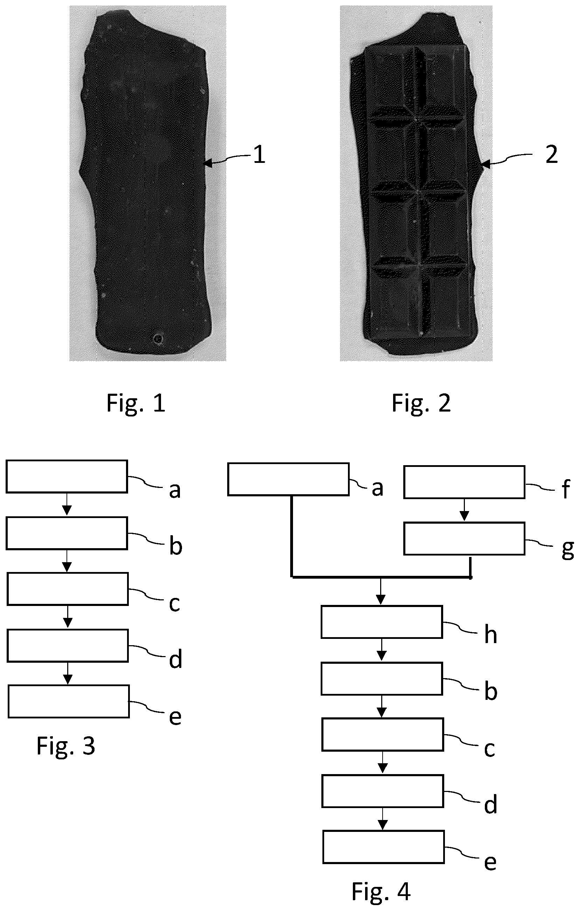

Fig. 1 shows a plan view of a chocolate of the present invention. A chocolate product 1 of the present invention is shown. The chocolate product 1 is a dark chocolate comprising cocoa nibs, cocoa butter, sugar, and biomass of a fungus.

Fig. 2 shows a plan view of a further chocolate product of the present invention. A chocolate product 2 is shown. The chocolate product 2 corresponds to the chocolate product 1 shown in Fig. 1 except that the chocolate product 2 is further molded so that a consumer can break it more easily pieces having approximately the same size.

Fig. 3 shows a flow chart of a method according to the present invention. The method comprises a step a), wherein sugar and/ or a sugar replacer and biomass of a fungus are milled together to form a mass. Subsequent to step a), a step b) is performed, wherein melted cocoa butter is added to the mass to form a further mass and then a step c) is performed, wherein the further mass is milled for conching. Then, a step d) is performed, wherein the milled further mass is maintained at a temperature of 40-45°C. Subsequent to step d), a step e) is performed, wherein the milled and heated further mass is tempered in order to obtain the chocolate product.

Fig. 4 shows a flow chart of a further method according to the present invention. The further method corresponds to the method shown in Fig. 3 except the method shown in Fig. 4 comprises further steps f) to h) which are performed before the step b). In step f), cocoa nibs are milled separately from the sugar and the biomass of the fungus which are milled in the step a). Subsequent to step f), a step g) is performed, wherein cocoa liquor in form of a fluid mass is derived of the milled coca nibs. Subsequent to steps a) and g), a step h) is performed, wherein the mass obtained in step a) is incorporated into the derived cocoa liquor. Then, the subsequent step b) is performed by adding the melted cocoa butter to the mass which is incorporated into the derived cocoa liquor. The, the steps c), d) and e) are performed, as described in relation to Fig. 1.

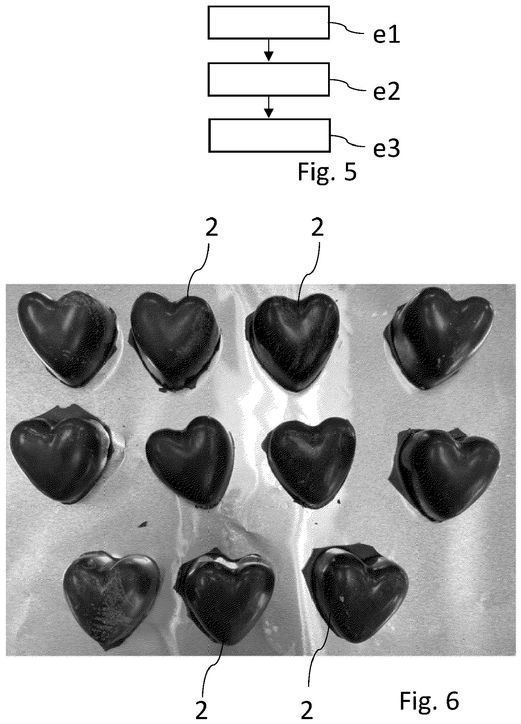

Fig. 5 shows a flow chart of a step according to the method shown in Fig. 3 and 4, respectively. The step e) includes the following partial steps. First, a step e1) is performed, wherein the milled and heated further mass is cooled to a temperature between 30 and 35°C to initiate crystallization. Subsequent to step e1) a step e2) is performed, wherein unstable polymorphic crystals are melted out at a temperature between 29 to 31 °C. Then, a step e3) is performed, wherein a crystallization at a temperature between 27 to 28°C is made.

Fig. 6 shows a plan view of a further chocolate product of the present invention. A further chocolate product 2 is shown. The chocolate product 2 corresponds to the chocolate product 2 shown in Fig. 2 except that the chocolate product 2 shown in Fig. 6 is molded in heart-shaped single pieces having approximately the same size.

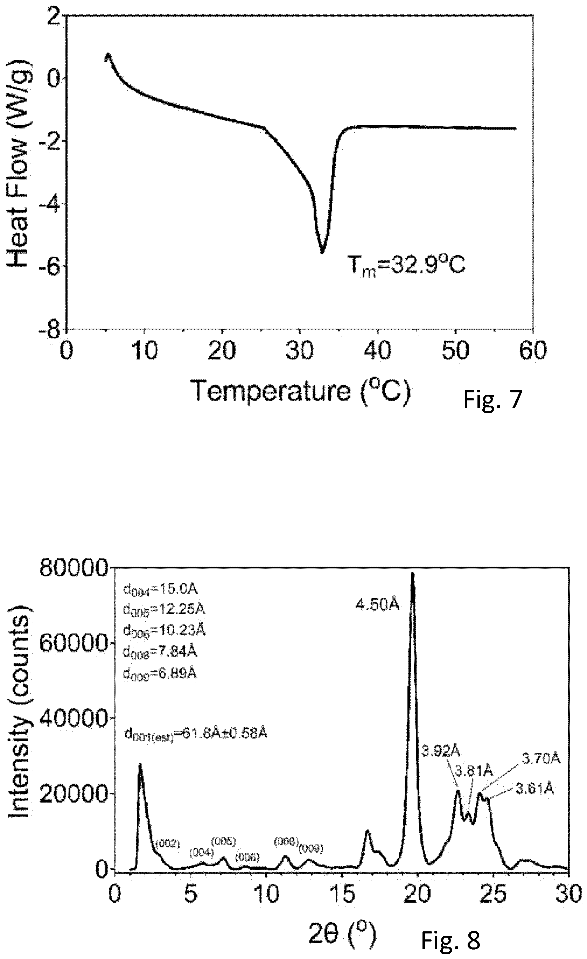

Fig. 7 shows a melting profile of the chocolate product, as shown in Fig. 1. To define the melting profile of the chocolate product, a differential scanning calorimeter (DSC) model Q2000 (TA Instruments, Mississauga, ON, Canada) was used. Nitrogen was used as the purge gas with the flow rate of 18 mL/min. The melting points of several samples comprising 2-5 mg of the chocolate product, as shown in Fig. 1, were determined by heating samples from 5 to 60 °C at the heating rate of 5 °C/min. As shown in Fig. 7 and based on the DSC result, the melting point of the chocolate product was 32.9 °C.

Fig. 8 shows a crystal polymorphic form of the chocolate product, as shown in Fig. 1. The crystal polymorphic form of chocolate was analyzed by X-ray diffraction (Miniflex Powder XRD spectrometer, Rigaku, Tokyo, Japan). The copper X-ray tube (wavelength of 1.54 Å) was operated at 40 kV and 44 mA. The measurement scan rate was set at 5°/min in the range 20 = 1-30° at 22 °C. As shown in Fig. 7, the diffracted peaks in the WAXS (wide-angle X-ray scattering) region of the X-ray analysis indicated a pure crystal form V of the chocolate product. Both melting point and the X-ray analysis indicated the desirable crystal form V for the chocolate product.

### Reference sign list:

- 1: chocolate product
- 2: chocolate product

## Claims

1. A chocolate product (1, 2) comprising
- at least one cocoa ingredient selected from the group comprising cocoa nibs, cocoa butter, cocoa powder, cocoa liquor,
- sugar and/or a sugar replacer,
**characterized by**
- a biomass of a fungus.

2. A chocolate product (1, 2) according to claim 1, wherein the biomass of the fungus has a dry matter content of at least 85 wt-%, preferably at least 90 wt.-%, more preferably at least 95 wt.-%, wherein the dry matter content is measured by thermogravimetric principle by measuring the start weight of a biomass sample before water draining, and drying the biomass sample by a radiant heater while measuring continuously the biomass sample weight by scale.

3. The chocolate product (1, 2) according to claim 1 or 2, comprising up to 6.0, preferably up to 5.5, more preferably up to 5.0 wt-% of the biomass of the fungus.

4. The chocolate product (1,2) according to any of preceding claims, wherein the fungus is a filamentous fungus, wherein the the filamentous fungus is preferably selected from the group consisting of *Aspergillus oryzae, Aspergillus niger, Penicillium chrysogenum, Penicillium roqueforti, Lecanicillium lecanii, Candida tropicalis, Candida utilis, Debaryomyces hansenii, Kluyveromyces marxianus, Fusarium venenatum, Rhizopus oryzae, Tremel-la fuciformis, Neurospora intermedia, or Monascus purpureus,* wherein the filamentous fungus is more preferably *Aspergillus oryzae,* wherein the filamentous fungus is even more preferably *Aspergillus oryzae* MUCL 31309.

5. The chocolate product (1,2) according to any of preceding claims, further comprising
- at least one milk ingredient, preferably milk powder and/or milk fat, and/or a milk substitute,
- an emulsifier, preferably lecithin,
- at least one cocoa butter equivalent, preferably selected from shea butter, palm oil, illipe butter, shorea robusta butter, kokum oil and mango oil.

6. The chocolate product (1, 2) according to any of preceding claims, comprising
- more than 35.0 wt-%, preferably, 35.0 to 45.0 wt-%, of the cocoa nibs, 2.0 to 7.0 wt-% of the cocoa butter, 40.0 to 50.0 wt.-% of the sugar, and 3.0 to 7.0 wt.-% of cocoa butter equivalent, 0.2 to 1.0 wt.-% of lecithin, and up to 5.0 wt.-% of the biomass of the fungus, preferably 40 wt-% of the cocoa nibs, 5 wt-% of the cocoa butter, 44 wt.-% of the sugar, 1 wt.-% of lecithin, 5 wt.-% of the cocoa butter equivalent, and 5 wt.-% of the biomass of the fungus.

7. The chocolate product (1, 2) according to any of preceding claims, wherein it is a solid non-powder chocolate product at 25°C and ambient pressure, preferably a chocolate bar.

8. A method for manufacture of a chocolate product (1, 2), comprising the following steps:
a) milling sugar and/or sugar replacer together with a biomass of a fungus to form a mass,
b) adding melted cocoa butter to the mass to form a further mass,
c) milling the further mass for conching,
d) maintaining the milled further mass at a temperature of 40-45°C, and
e) tempering the milled and heated further mass in order to obtain the chocolate product (1, 2).

9. The method according to claim 8, wherein step a) is performed over a first period of time in order to obtain particles having a mean particle size of 25 to 35 µm and/or the biomass of the fungus has a dry matter content of at least 80 wt-%, preferably at least 85 wt.-%, more preferably at least 90 wt.-%, wherein the dry matter content is measured by thermogravimetric principle by measuring the start weight of a biomass sample before water draining, and drying the biomass sample by a radiant heater while measuring continuously the biomass sample weight by scale.

10. The method according to claim 8 or 9, comprising the following steps which are performed before the step b)
f) milling cocoa nibs separately from the sugar and the biomass of the fungus which are milled in the step a),
g) derive cocoa liquor in form of a fluid mass of the milled coca nibs,
h) incorporating the mass obtained in step a) into the derived cocoa liquor,
wherein the step b) is performed by adding the melted cocoa butter to the mass which is incorporated into the derived cocoa liquor.

11. The method according to any of claims 8 to 10, wherein the step e) includes the following partial steps in the given order:
e1) cooling the milled and heated further mass to a temperature between 30 and 35°C to initiate crystallization,
e2) melting out unstable polymorphic crystals at a temperature between 29 to 31 °C, and
e3) crystallizing at a temperature between 27 to 28°C.

12. The method according to anyone of claims 8 to 11, wherein the tempered further mass is molded in order to obtain a molded chocolate product (2).
